# EUROPEAN PATENT APPLICATION

(11) **EP 0 719 799 A1**
(43) Date of publication of application: **03.07.1996**
(21) Application number: 95120362.9
(22) Date of filing: 21.12.1995
(51) Int. Cl.: C08F 10/02, C08F 4/649

(54) **Catalysts for the (co)polymerization of ethylene**

(30) Priority: 29.12.1994 IT MI942672
(71) Applicant: Montell Technology Company bv, NL-2132 MS Hoofddorp (NL)
(72) Inventor: Dall'Occo, Tiziano, I-44100 Ferrara (IT); Morini, Giampiero, I-27058 Voghera (PV) (IT); Albizzati, Enrico, I-28041 Arona (NO) (IT)
(74) Representative: Zanoli, Enrico

(57) **Abstract**

The present invention relates to new catalysts for the polymerization of ethylene and its blends with CH₂=CHR olefins, where R is an alkyl, cycloalkyl or aryl radical that has 1-12 carbon atoms, comprising the product of the reaction between:
(a) a solid catalytic component comprising a magnesium halide in an active form and a titanium compound containing at least one Ti-halogen bond;
(b) an Al-alkyl compound
(c) an electron-donor compound selected from the 1,3 diethers that have a particular structural formula.

These catalysts make it possible to produce (co)polymers of ethylene with narrow MWD with good polymerization yields.

## Description

The present invention relates to catalysts for the polymerization of ethylene and its mixtures with CH₂=CHR olefins, where R is an alkyl, cycloalkyl or aryl radical having 1-12 carbon atoms, comprising the product of the reaction between a solid catalytic component containing Ti, Mg and halogen, an Al-alkyl compound and a particular electron-donor compound. The catalyst of the invention finds appropriate use in processes of (co)polymerization of ethylene for preparing (co)polymers that have a narrow molecular weight distribution (MWD). The MWD is an important characteristic of ethylene polymers as it influences both the rheological behaviour, and hence processability, and the final mechanical properties of the polymer. Especially in the case of LLDPE, polymers with narrow MWD are suitable for films and for injection moulding, since the problems of distortion and shrinkage of the manufactured article are reduced to a minimum.

For polymers of ethylene, the range of the molecular weight distribution is generally expressed in terms of the melt flow ratio F/E, which is the ratio of the melt index measured with a weight of 21.6 kg (melt index F) to that measured with a weight of 2.16 kg (melt index E). Measurements of melt index are effected according to ASTM D-1238, at 190°C.

A catalyst for preparing (co)polymers of ethylene with narrow MWD is described in European Patent Application EP-A-373999: the catalyst comprises a solid catalytic component consisting of a titanium compound supported on magnesium chloride, an Al-alkyl compound and an electron-donor compound (external donor) selected from the monoethers with the formula R'OR''. Good results in terms of narrow MWD are only obtained when the solid component also contains an internal electron-donor compound (diisobutylphthalate).

New catalysts have now been found for the polymerization of ethylene and of its blends with one or more CH₂=CHR olefins which comprise particular external electron-donor compounds and which make it possible to obtain (co)polymers of ethylene with a narrow MWD. In addition, these catalysts display a good range of properties, such as good yields in polymerization and the ability to provide polymers that have good morphology and high molecular weights.

The catalysts which are the subject of the invention comprise the product of the reaction between:
(a) a solid catalytic component comprising a magnesium halide in an active form and a titanium compound containing at least one Ti-halogen bond;
(b) an Al-alkyl compound;
(c) an electron-donor compound selected from the 1,3-diethers with the formula (I): 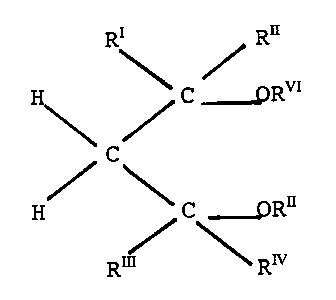 in which R^{I}, R^{II}, R^{III} and R^{IV}, which may be identical or different, are hydrogen or linear or branched alkyl radicals, or cycloalkyl, aryl, alkaryl or aralkyl radicals that have 1-18 carbon atoms; R^{V} and R^{VI}, which may be identical or different, are linear or branched alkyl radicals, or cycloalkyl, aryl, alkaryl or aralkyl radicals that have 1-18 carbon atoms, with the condition that they cannot be methyl simultaneously when the radicals denoted by R^{I} to R^{IV} are hydrogen; at least two of the said radicals denoted by R^{I} to R^{IV} can be linked together to form one or more cyclic structures.

Alternatively, the electron-donor compound c) can be chosen from among the 1,3-diethers with formula (II): 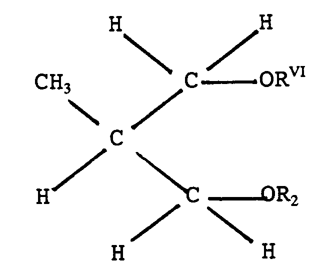
in which the radicals R₁ and R₂, which may be identical or different, are linear or branched alkyl radicals, or cycloalkyl, aryl, alkaryl or aralkyl radicals that have 1-18 carbon atoms, with the condition that they cannot be methyl simultaneously; the said radicals R₁ and R₂ can be linked together to form one or more cyclic structures.

The active form of magnesium chloride is well known in the art and is characterized by an X-ray spectrum in which the most intense diffraction line that appears in the spectrum of the non-active chloride is diminished in intensity and in the said spectrum a halo is observed, the maximum intensity of which is shifted towards lower angles relative to that of the most intense line.

Preferred, among the titanium compounds containing at least one Ti-halogen bond, are those that have the formula Ti(OR)_{n-y}X_{y}, in which n is the valence of the titanium and y is a number between 1 and n.

The solid component (a) can be prepared conveniently by reaction between a titanium compound with the formula Ti(OR)ₙ₋ₘXₘ, where n is the valence of the titanium and m is a number between 0 and n, and a magnesium chloride obtained by dealcoholizing an adduct MgCl₂.pROH, where p is a number from 1 to 6 and R is a hydrocarbon radical that has 1-12 carbon atoms. If necessary, the reaction can be carried out in the presence of a halogenating compound or of a reducing compound or of a mixture of both or in the presence of a compound that has halogenating and reducing activity.

Examples of preparation of the solid catalytic component are described in Patents USP 4 218 339 and USP 4 472 520, the descriptions of which are included here for reference. The solid components of the catalyst can also be prepared according to the methods described in Patents USP 4 748 221 and 4 803 251. Catalytic components with a regular morphology, for example spherical or spheroidal, are particularly preferred. Examples of these components are described in Patent USP 4 399 054 and in Patent Applications EP-A-395083, EP-A-553805, EP-A-553806, EP-A-601525 and EP-A-604846, the descriptions of which are included here for reference.

The aluminium-alkyl compound (b) is preferably selected from the aluminium-trialkyls such as Al-trimethyl, Al-triethyl, Al-triisobutyl, Al-tri-n-butyl, Al-tri-n-octyl. It is also possible to use mixtures of Al-trialkyls with Al-alkyl halides or Al-alkyl sesquihalides such as AlMe₂Cl, AlEt₂Cl and Al₂Et₃Cl₃, as well as compounds containing two or more Al atoms linked together via O or N atoms or SO₃ or SO₄ groups.

A preferred group of electron-donor compounds (c) is chosen from among the 1,3-diethers with the formula (I) in which at least two from among the radicals R^{I} to R^{IV} are C₁-C₁₂ hydrocarbon radicals.

More preferably, at least one of the radicals R^{I} to R^{IV} is a hydrocarbon radical that has a number of carbon atoms greater than one.

Preferably, in the diethers with formula (I), the radicals R^{V} and R^{VI} are C₁-C₁₂ hydrocarbon radicals.

Some examples of 1,3-diethers with formula (I) that can be used in the catalysts of the invention are: 1,1,3,3-tetramethyl-1,3-dimethoxypropane, 1,1,3,3-tetramethyl-1,3-diethoxypropane, 1-phenyl-3-methyl-1,3-dimethoxypropane, 1-phenyl-3-methyl-1,3-diethoxypropane, 1-isobutyl-3-phenyl-1,3-dimethoxypropane, 1,1,3,3-tetramethyl-1,3-dibutoxypropane, 1-phenyl-3-methyl-1,3-dibutoxypropane, 1-isobutyl-3-phenyl-1-methoxy-3-butoxypropane.

Some examples of 1,3-diethers with formula (II) that can be used in the catalysts of the invention are: 2-methyl-1,3-diethoxypropane, 2-methyl-1,3-dibutoxypropane, 2-methyl-1-methoxy-3-butoxypropane, and 2-methyl-1-ethoxy-3-secbutoxypropane.

Compounds with formula (I) and compounds with formula (II) can be prepared advantageously as described in Patent EP-361493, the description of which is included here for reference.

The catalysts of the invention find appropriate application in processes of polymerization of ethylene and its blends with CH₂=CHR olefins, where R is an alkyl, cycloalkyl or aryl radical that has 1-12 carbon atoms, either in liquid phase or in gas phase, obtaining polymers that are characterized by a narrow MWD. For example, it is possible to obtain: high-density polyethylenes (HDPE; density greater than 0.940) including homopolymers of ethylene and copolymers of ethylene with alpha olefins that have from 3 to 12 carbon atoms; linear low-density polyethylenes (LLDPE, density less than 0.940) and linear polyethylenes with very low and ultra-low density (VLDPE and ULDPE; density less than 0.920, up to 0.880) consisting of copolymers of ethylene and one or more alpha olefins that have from 3 to 12 carbon atoms and with a content in moles of units derived from the ethylene of more than 80%.

The following examples further illustrate the present invention. Naturally it is possible for variants to be effected without straying from the spirit of the present invention.

The properties indicated are determined according to the following methods:
- MIE flow index: ASTM-D 1238, condition E
- MIF flow index: ASTM-D 1238, condition F
- Bulk density: DIN-53194
- Morphology of the polymer: ASTM-D 1921-63
- Intrinsic viscosity: ASTM 2857-70

### EXAMPLES

### Preparation of the spherical support (MgCl₂/EtOH ADDUCT)

The magnesium chloride/alcohol adduct was prepared following the method described in Example 2 of USP 4 399 054, but operating at 2000 rpm instead of at 10 000 rpm.

The adduct, containing about 3 mol of alcohol, had average size of about 60 µm with a range of dispersion of about 30-90 µm.

### General method of preparation of the solid component

The spherical support prepared according to the conditions stated above was submitted to a heat treatment, in a stream of N₂, in the temperature range 50-150°C until spherical particles were obtained with a residual alcohol content of about 35% (1.1 mol of alcohol per mole of MgCl₂).

300 g of this support were loaded into a 5000 cm³ reactor in suspension with 3000 cm³ of anhydrous hexane. While stirring, at room temperature, a hexane solution of AlEt₃ (107 g/l) was slowly introduced, to give a molar ratio Al/EtOH of about 0.5. It was heated to 60°C and maintained at this temperature for 60 min, at the end of which the solvent was removed by evaporation.

260 g of support obtained in this way were loaded into a 5000 cm³ reactor together with 3000 cm³ of anhydrous hexane. While stirring, 242 g of Ti(OBu)₄ were fed in at room temperature in 30 min.

Stirring was continued for a further 30 min and then 350 g of SiCl₄ diluted with 250 cm³ of hexane were fed in at room temperature in the space of 30 min. It was heated to 65°C in 40 min and this temperature was maintained for 3 hours, then the liquid phase was separated by sedimentation and siphoning. Then 7 washings were effected with hexane (3000 cm³ each time), 3 of which were at 60°C and 4 were at room temperature. The component in spherical form was dried at 50°C under vacuum.

The characteristics were as follows:

| | |
|---|---|
| - Total titanium | 7.95% (by weight) |
| - Mg | 11.75% (by weight) |
| - Cl | 43.2% (by weight) |
| - residual Al | 0.45% (by weight) |
| - OEt | 6% (by weight) |
| - OBu | 19.8% (by weight) |

### EXAMPLE 1

### Polymerization of ethylene (HDPE)

Operating in a hydrogen atmosphere, 900 ml of a solution containing 5 mmol of TEAL in 1000 ml of hexane were placed in a 2.5-litre autoclave, equipped with a magnetic paddle stirrer, manometer, temperature indicator, catalyst charging system, feed lines for the monomers, and a jacket for thermostatic control, decontaminated beforehand by washing with ethylene at 70°C.

The catalytic suspension was prepared separately by placing 50 ml of the TEAL solution previously prepared and a quantity of from 10 to 15 grams of the solid component a) in a test-tube of the Schlenk type, at a temperature of 25°C. The two components were left in contact for a time of 5 min, after which the aliquot of 1-1,3-3-tetramethyl-1,3-dimethoxypropane (electron-donor compound c) shown in Table 1 was added. The components were left in contact for a further 2 min and then the suspension was introduced into the autoclave.

The temperature of the autoclave was raised to 85°C, hydrogen was fed in up to an overall pressure of 6.3 bar and ethylene up to a total pressure of 11.6 bar which was kept constant throughout polymerization.

After 60 minutes, polymerization was interrupted by introducing 0.6 litre (at STP) of CO into the autoclave, and the autoclave was cooled to 30°C. The polymer suspension was then filtered and the polymer obtained was dried at 60°C under vacuum to constant weight. The conditions and the results of polymerization are presented in Table 1.

### EXAMPLE 2

### Polymerization of ethylene (HDPE)

Polymerization was carried out as described in Example 1 except that 1-phenyl-3-methyl-1,3-dimethoxypropane was used as the electron-donor compound (c).

### EXAMPLE 3 (for comparison)

Polymerization was carried out as described in Example 1 except that no electron-donor compound (c) was used. The results of the polymerization are given in Table 1.

### EXAMPLE 4 (for comparison)

Polymerization was carried out as described in Example 1 except that 1,2-dimethoxyethane was used as electron-donor compound (c). The results of polymerization are given in Table 1.

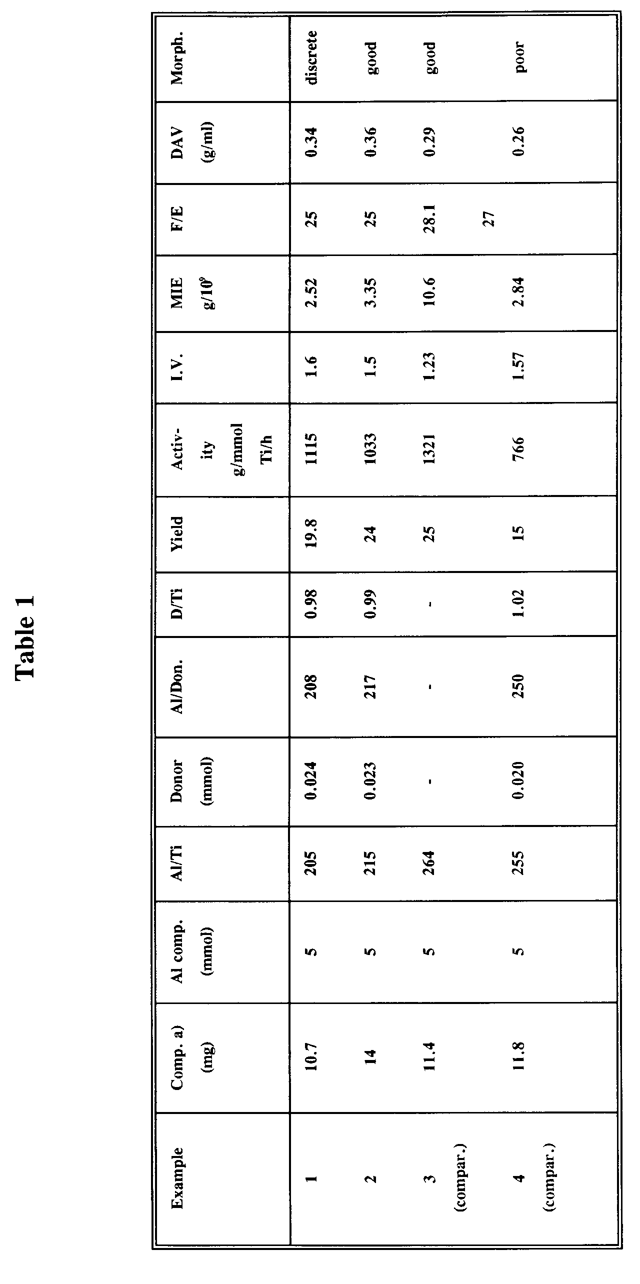

## Claims

1. Catalysts for the polymerization of ethylene and its mixtures with CH₂=CHR olefins, where R is an alkyl, cycloalkyl or aryl radical having 1-12 carbon atoms, comprising the product of the reaction between:
(a) a solid catalytic component comprising an active form of a magnesium halide and a titanium compound containing at least one Ti-halogen bond;
(b) an Al-alkyl compound;
(c) an electron-donor compound selected from the 1,3-diethers with the formula (I): 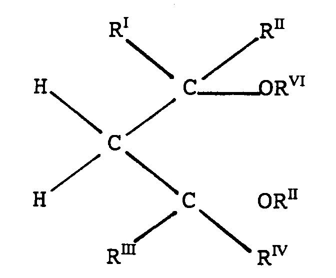
in which R^{I}, R^{II}, R^{III} and R^{IV}, which may be identical or different, are hydrogen or linear or branched alkyl radicals, or cycloalkyl, aryl, alkaryl or aralkyl radicals that have 1-18 carbon atoms; R^{V} and R^{VI}, which may be identical or different, are linear or branched alkyl radicals, or cycloalkyl, aryl, alkaryl or aralkyl radicals that have 1-18 carbon atoms, with the condition that they cannot be methyl simultaneously when the radicals R^{I} to R^{IV} are hydrogen; at least two of the said radicals R^{I} to R^{VI} can be linked together to form one or more cyclic structures.

2. Catalysts according to Claim 1, in which the electron-donor compound (c) is selected from the 1,3-diethers with the formula (I) in which at least two among the radicals R^{I} to R^{IV} are C₁-C₁₂ hydrocarbon radicals.

3. Catalysts according to Claim 2, in which at least one of the radicals denoted by R^{I} to R^{IV} is a hydrocarbon radical having a number of carbon atoms greater than one.

4. Catalysts according to Claim 1, in which the electron-donor compound (c) is selected from the 1,3-diethers with the formula (I), in which the radicals R^{V} and R^{VI} are C₁-C₁₂ hydrocarbon radicals.

5. Catalysts according to Claim 1 in which the electron-donor compound (c) is selected from the group consisting of 1-1,3-3-tetramethyl-1,3-dimethoxypropane, 1-1,3-3-tetramethyl-1,3-diethoxypropane, 1-phenyl,3-methyl,1-3-dimethoxypropane, 1-phenyl,3-methyl,1-3-diethoxypropane, 1-isobutyl,3-phenyl,1-3-dimethoxypropane, 1-1,3-3-tetramethyl-1,3-dibutoxypropane, 1-phenyl,3-methyl,1-3-dibutoxypropane, 1-isobutyl,3-phenyl,1-methoxy,3-butoxypropane.

6. Catalysts according to one of the claims from 1 to 5 in which the magnesium halide is a magnesium chloride and the titanium compound is selected from the compounds with the formula:
Ti(OR)_{n-y}X_{y}
in which n is the valence of the titanium and y is a number between 1 and n.

7. Catalysts according to Claim 6 in which the magnesium chloride is obtained by dealcoholizing an adduct MgCl₂.nROH, where n is a number from 1 to 6 and R is a hydrocarbon radical that has 1-12 carbon atoms.

8. Catalysts for the polymerization of ethylene and its mixtures with CH₂=CHR olefins, where R is an alkyl, cycloalkyl or aryl radical having 1-12 carbon atoms, comprising the product of the reaction between:
(a) a solid catalytic component comprising a magnesium halide in an active form and a titanium compound containing at least one Ti-halogen bond;
(b) an Al-alkyl compound;
(c) an electron-donor compound selected from the 1,3-diethers with the formula (II): 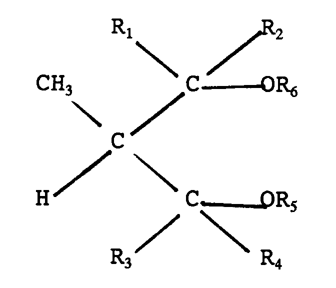
in which the radicals R₁ to R₄ are hydrogen; and the radicals R₅ and R₆, which may be identical or different, are linear or branched alkyl radicals, or cycloalkyl, aryl, alkaryl or aralkyl radicals that have 1-18 carbon atoms, with the condition that they cannot be methyl simultaneously; the said radicals R₅ and R₆ can be linked together to form one or more cyclic structures.

9. Catalysts according to Claim 8 in which the electron-donor compound (c) is selected from the group consisting of 2-methyl-1-3-diethoxypropane, 2-methyl-1-3-dibutoxypropane, 2-methyl-1-methoxy,3-butoxypropane, 2-methyl-1-ethoxy,3-sec-butoxypropane.

10. Process for the polymerization of ethylene and of its blends with CH₂=CHR olefins, where R is an alkyl, cycloalkyl or aryl radical that has 1-12 carbon atoms, carried out in the presence of a catalyst according to one or more of the claims from 1 to 9.

11. Process according to Claim 10 in which the polymer that is obtained contains up to 20% in moles of one or more CH₂=CHR olefins.

12. Process according to Claim 10 in which the CH₂=CHR olefin is selected from 1-butene, 1-pentene, 4-methyl-1-pentene, 1-hexene, and 1-octene.
